(19) **Europäisches Patentamt**

**European Patent Office**

**Office européen des brevets**

(11) **EP 1 085 273 A1**

(12) **EUROPÄISCHE PATENTANMELDUNG**

(43) Veröffentlichungstag:
**21.03.2001 Patentblatt 2001/12**

(51) Int Cl.[7]: **F24F 12/00**, F28D 9/00

(21) Anmeldenummer: **99250323.5**

(22) Anmeldetag: **14.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **FPL Wärmerückgewinnung-Lüftung GmbH**
**38889 Blankenburg (DE)**

(72) Erfinder:
• **Friedrich, Herbert, Dr.**
  **10315 Berlin (DE)**
• **Pürschel, Günter, Dipl.-Ing.**
  **06484 Quedlinburg (DE)**

• **Graf, Dietrich, Dr.-Ing.**
  **04683 Naunhof Ortsteil Eicha (DE)**

(74) Vertreter: **Hengelhaupt, Jürgen, Dipl.-Ing. et al**
**Patentanwälte**
**Gulde Hengelhaupt Ziebig,**
**Büro Berlin-Adlershof**
**Rudower Chaussee 29**
**12489 Berlin (DE)**

Bemerkungen:
Die Bezugnahmen auf die Abbildung 12 gelten als gestrichen (Regel 43 EPÜ).

(54) **Verfahren und Vorrichtung zum Wärmetausch**

(57) Der Wärmeaustauscher besteht aus übereinander angeordneten Profilplatten, deren Profile in der Profilplattenebene alternierend entgegengerichtet um den gleichen Winkel gegen die Längsrichtung (Richtung des Druckgradienten) schräg gestellt sind. Die Profilplatten bilden Strömungskanäle, die wegen der Profilschrägstellung nicht voneinander getrennt sind, die aber an allen Begrenzungsflächen in Gegenrichtung umströmt werden. Die sich im Betrieb ausbildende Strömung ist infolge der Schrägstellung der Profile nicht laminar. Die so realisierte Turbulenzwärmerückgewinnung zeichnet sich durch eine hohe Effizienz der Wärmerückgewinnung bei geringem Volumenbedarf aus. Die Schrägstellung der Profile sichert die druckfeste gegenseitige Abstützung aufeinander gestapelter, Platten im Wärmerückgewinner. Im Bereich dezentraler Anlagen werden mit den Turbulenzwärmerückgewinnern effiziente Anwendungen im Fensterbereich von Gebäuden erschlossen.

Fig. 11

## Beschreibung

Die Erfindung betrifft ein Verfahren und eine Vorrichtung zum Wärmetausch zwischen zwei oder mehreren Stoffströmen unterschiedlicher Temperatur, die durch Trennplatten, die Wärmeübergangsflächen, getrennt sind, und die die durch diese Trennwände gebildeten zwei(oder mehrere) Gruppen von Strömungskanälen über jeweilige Ein- und Auslaßöffnungen nach dem Gegenstromprinzip durchströmen, und für den die erfindungsgemäße Ausbildung der Trennwände eine sehr hohe, auf das Tauschervolumen bezogene, Wärmeaustauschleistung bei zugleich geringen Temperaturdifferenzen über die Wärmetauscherflächen erzielt wird, und damit ein sehr breites Spektrum von Anwendungen erschlossen wird, neben allen herkömmlichen insbesondere auch solche, bei denen für den Wärmetauschereinbau ein nur begrenztes und in der Form vorgegebenes Volumen verfügbar ist.

Gegenstromwärmetauscher gehören zum Stand der Technik. Dabei ist mit diesen eine wesentlich bessere Effizienz erreichbar als bei den derzeit noch sehr breit eingesetzten Kreuzstromplattenwärmeüberträgern. Denn wegen der Gegenstromführung ist bei geeigneter konstruktiver Gestaltung eine solche Betriebsweise erreichbar, bei der die Austrittstemperatur des wärmeaufnehmenden Stoffstromes sich der Eintrittstemperatur des wärmeabgebenden Stoffstromes annähert. Für die durch die Trennwand des Wärmetauschers hindurch transportierte Wärmemenge Q gilt näherungsweise

$$(1) \qquad Q = k * A * \Delta T_m,$$

k - Wärmedurchgangskoeffizient, A - von den Stoffströmen umströmte Trennfläche (Wärmetauscherfläche), $\Delta T_m$ - mittlere Temperaturdifferenz zwischen den Stoffströmen längs (bzw. entgegen) der Strömungsrichtung.

Verbesserungen der Effizienz eines Wärmetauschers bezogen auf das Tauschervolumen zielen naturgemäß auf eine Vergrößerung der Trennfläche A bei gleichbleibendem Tauschervolumen und die Vergrößerung des k-Faktors in G1. (1) hin. Eine deutliche Vergrößerung der Trennfläche im Vergleich zum Kreuzstromwärmetauscher wird dabei durch eine veränderte Form der Wärmetauscheranordnung, insbesondere eine langgestreckte Bauweise in Verbindung mit der Nutzung des Gegenstromprinzips möglich. Die Realisierung kanalförmiger Trennflächen bringt eine weitere deutliche Vergrößerung der Fläche A. Die Vergrößerung des k-Faktors ist vor allem mit einer gezielten Beeinflussung der Strömungsverhältnisse im Nahbereich der Trennfläche möglich. Denn die Wärmedurchgangszahl k ist allein durch die Wärmeübergangszahlen Fluid/ Trennfläche bestimmt, der Wärmeleitwiderstand der Trennplatten ist auch für weniger gut wärmeleitende Materialien wie Kunststoff oder Glas bei den üblichen Dicken der Trennplatten vernachlässigbar klein. Diese Wärmeübergangszahlen sind insbesondere beim Vorliegen laminarer Strömungsverhältnisse deutlich kleiner als bei einer turbulenten Strömung. Hierbei ist allerdings zu beachten, daß eine turbulente Strömung wie auch Maßnahmen zur Störung der laminaren Strömung, etwa durch Änderung von Durchström- und Anströmquerschnitten, Vergrößerungen der Druckverluste längs der Strömungsrichtung bewirken.

Bei dem in der Patentschrift DE 195 19 511 beschriebenen Gegenstromwärmetauscher wird die Wärmetauscherfläche dadurch vergrößert, daß in einer im Prinzip dem Plattenwärmetauscheraufbau entsprechenden Anordnung in die Plattenzwischenräume zumindest alternierend Querstege (Rippen) angebracht werden und somit die Austauschfläche annähernd verdoppelt wird. Hierdurch wird der Zwischenraum zwischen zwei Platten in Strömungskanäle annähernd quadratischen Querschnitts unterteilt, die jedoch sämtlich in gleicher Richtung durchströmt werden. Das Gegenstromprinzip ist hier nur bezüglich benachbarter Plattenzwischenräume realisiert. Die Vergrößerung der Wärmetauscherfläche wird damit nicht voll wirksam, da die Wärmeableitung über die Stege, also über eine Strecke groß gegen übliche Plattendicken, erforderlich ist, und der Wärmeleitwiderstand längs dieser "Rippen" nicht mehr als klein gegenüber den Wärmeübergangszahlen an der Wärmetauscherflächengrenze vorausgesetzt werden kann. Ein Kanalwärmetauscher mit optimal vergrößerter Wärmetauscherfläche und allseitig in Gegenrichtung durchströmten Kanälen wird in der DE 43 33 904 beschrieben. Mit dem hier benutzten spitzwinkligen Trapezkegelprofil wird zudem eine Druckstabilisierung und die Formbeständigkeit der Kanäle dadurch erreicht, daß die breiteren Stümpfe der Trapezkegel auf die schmaleren offenen Oberseiten der darunterliegenden Trapezkegel aufgelegt werden und dieses Tauscherpaket in ein druckstabiles Gehäuse eingefügt wird. Diese in vieler Hinsicht vorteilhafte und insgesamt sehr weiterführende Lösung hat jedoch den Nachteil, daß zur Störung der laminaren Strömung bzw. der Erzeugung von Turbulenzen, d.h. zur Vergrößerung des k-Faktors in Gl. (1), eine Strukturierung der Wandungen innerhalb der quadratischen Kanäle vorgesehen werden muß. Desweiteren wird eine Störung der laminaren Strömung durch wiederkehrende Anströmvorgänge im Kanal des Wärmetauschers erzeugt, indem in bestimmten Abständen die Kanalströmung über eine kurze Strecke in einen flachen Kanal entsprechend den Verhältnissen beim Plattenwärmetauscher übergeht. Dadurch entstehen jedoch wiederholte Querschnittsverengungen und -erweiterungen, die denen der ebenfalls analog zum Plattenwärmetauscher gestalteten Ein- und Austrittsbereiche beider Stoffströme ähnlich sind, und die zusätzliche, nicht unerhebliche Druckverluste erzeugen. Darüber hinaus reduzieren diese Unterbrechungen der Strömungskanäle durch ebene Platten die Wärmetauscherfläche bezogen auf das Volumen des Wärmetauschers.

Die raumsparende Trennung zweier Gruppen von Strömungskanälen, wie sie bei Wärmetauschern erforderlich ist, mittels einer hin- und hergewendeten streifenförmigen Trennfläche, und die dann mit geringerem Aufwand mögliche Abdichtung an den seitlichen Begrenzungen der Strömungskanäle, wird bereits in der DE 30 06 988 beschrieben. Mit der dort gewählten Gesamtlösung wird allerdings nur im mittleren Teil des Faltenpaketes das Gegenstromprinzip realisiert.

Zur Abstandshalterung werden bei Wärmetauschern häufig Vorsprünge an den Seitenwänden oder Distanzstücke genutzt (EP 00 55 711 ), die zusätzliche Strömungswiderstände darstellen. Zudem sind derartige Störungen in Strömungskanälen Orte zusätzlicher Ablagerungen von Verunreinigungen.

Mit der DE 196 35 552 wird ein rekuperativer Wärmetauscher beschrieben, dessen Kanäle der sie durchströmenden Medien schachbrettartig angeordnet sind und der aus übereinander angeordneten zickzackförmig ausgebildeten Platten besteht. Eine Beeinflussung der Strömung wird durch zusätzliche Maßnahmen in Form von Hilfskonstruktionen erreicht.

Steht für den Einbau eines Wärmerückgewinners nur ein begrenztes und zudem in der Form vorgegebenes Volumen zur Verfügung, so sind Lösung mit dem derzeit verfügbaren und breit eingesetzten Kreuzstrom-Plattenwärmetauscher nur begrenzt möglich. Diese sind zwar in bestimmtem Umfang durch Parallel- und/oder Reihenschaltung gegebenen räumlichen Einschränkungen für ihren Einbau anpaßbar. Auch läßt sich durch Reihenschaltung die Rückwärmezahl (der Wirkungsgrad) begrenzt erhöhen. Diese Variabilität ist jedoch bei großen Gruppen von Anwendungen nicht ausreichend, zudem werden die Druckverluste durch solche Schaltungen vergrößert.

Eine Reduzierung des für Anlagen zur Wärmerückgewinnung bei der Lüftung erforderlichen Volumens ist nicht zuletzt auch aus Kostengründen anzustreben. Der Nachrüstung vorhandener Gebäude mit solchen Anlagen sind oft wegen des Raumbedarfs Grenzen gesetzt. Hohe Anforderungen werden auch an effiziente dezentrale Anlagen gestellt. Die Verfügbarkeit leistungsfähiger Wärmerückgewinner mit geringem spezifischem Raumbedarf erschließt dabei vorteilhafte Anwendungen. Der Einbau dezentraler Anlagen erfolgt bekanntlich am wirtschaftlichsten unter Nutzung vorhandener Öffnungen in den Wänden von Gebäuden. Das sind vor allem die Fensterbereiche.

Für den Einbau von Lüftungsanlagen mit und ohne Wärmerückgewinnung liegen eine Reihe von Lösungsvorschlägen vor. So wird in der DE 27 18 814 ein Lüftungsgerät mit Wärmetauscher beschrieben, das im oberen Teil an das Fenster angebaut ist und bei dem der Lufteinlaß bzw. der Luftauslaß über eine Kippvorrichtung des Fensters realisiert wird. Diese Lösung erfordert jedoch kompliziertere zusätzliche Anbauten an den Fensterrahmen. Die DE 28 50 889 sieht zur Zwangsbelüftung von Räumen die Befestigung bestimmter Vorrichtungen an den Schenkeln des Fensterrahmens vor. Der Einbau einer oder mehrerer Belüftungsanlagen in eine Wand zusammen mit einem Fenster, insbesondere unter einem Fenster, wird in den Schriften DE 29 05 884, DE 43 43 108, DE 195 48 599 und DE 196 10 884 beschrieben. Diese Lösungen sehen eine Temperaturbeeinflussung der Zuluft mit Hilfe eines Wärmetauschers (Heizkörper o. ä.) vor, der auch von einem Kühlmedium durchflossen werden kann. Die DE 29 19 682 beschreibt eine Lüftungsvorrichtung im Fensterbereich ohne Wärmerückgewinnung. Die DE 44 35 064 sieht die Luftführung durch ein hohles Fensterbrett und die Anordnung eines Wärmerückgewinners unter dem Fensterbrett vor, wobei vom Raum aus sichtbare Luftförderelemente senkrecht an den Fensterrahmenseiten angeordnet werden. Diese Lösung beansprucht ein zusätzliches Volumen des Raumes unter dem Fensterbrett, welches häufig für das Anbringen von Heizungskörpern vorgesehen ist. In der DE 195 34 843 wird eine Lüftungsvorrichtung mit Wärmerückgewinner als Einbaumodul in einem Rolladenkasten angeordnet. Als Wärmerückgewinner ist ein quadratischer Plattenwärmetauscher vorgesehen, der im Kreuzstrom betrieben wird und mittig in einem freien Raum des Rolladenkastens angeordnet wird. Bei geöffnetem Rolladen wird die Außenluft über den Rolladenpanzer dem Einbaumodul zugeführt. Bei geschlossenem Rolladen wird diese am unteren Ende des Rolladens angesaugt und zwischen Fenster und Rolladen nach oben zum Wärmerückgewinner geführt. Durch die Führung des Zuluftstromes zwischen Rolladen und Fenster sollen die Transmissionswärmeverluste des Fensterbereiches zurückgewonnen werden. Real führt die Zuluftströmung zu einer zusätzlichen Abkühlung der Fensteraußenfläche und damit zu einer Erhöhung der Transmissionsverluste im Fensterbereich. Zudem wird die wärmedämmende Wirkung des Rolladens aufgehoben.

Der Erfindung liegt die Aufgabe zugrunde, ein Verfahren und eine Vorrichtung zum Wärmetausch anzugeben, welche bei geringem Volumenbedarf, einer gegebenen Anpaßbarkeit an vorgegebene Bauformen und ausreichendem volumenspezifischem Luftmassenstrom einen hohen Wirkungsgrad sichern, ohne überhöhte Druckverluste aufzuweisen, und welche damit hochwirksam in zentralen wie auch dezentralen Anlagen einsetzbar sind.

Diese Aufgabe wird erfindungsgemäß gelöst durch die Merkmale im kennzeichnenden Teil der Ansprüche 1 und 10 im Zusammenwirken mit den Merkmalen im Oberbegriff. Zweckmäßige Ausgestaltungen der Erfindung sind in den Unteransprüchen enthalten.

Ein besonderer Vorteil der Erfindung besteht darin, daß die erfindungsgemäße Wärmeübertragung mit hoher Effizienz bei geringem Volumenbedarf erfolgt, indem die übereinander angeordneten Profilelemente alternierend jeweils einen Winkel $\varphi$ und $-\varphi$ mit der Längsrichtung des Wärmetauschers bilden.

Ein weiterer Vorteil der Erfindung besteht darin, daß gezielte Strömungsturbulenzen erzeugt werden, indem die Fluidströmung in Richtung des Druckgradienten durch in Schrägstellung versetzt zueinander angeordnete Profilelemente geführt wird, hierdurch Querströmungen erzeugt werden und durch Überlagerung der Längsströmung mit den Querströmungen eine Rotationsströmung entsteht.

Ein vorteilhaftes Anwendungsgebiet der Erfindung ist der Einsatz des Wärmetauschers im Fensterbereich von Gebäuden, wobei das Raumlüftungsgerät unter dem Fensterbrett eines Fensters angeordnet oder in ein vergrößertes Fensterbrett integriert ist.

Die Erfindung soll nachstehend anhand von zumindest teilweise in den Figuren dargestellten Ausführungsbeispielen näher erläutert werden. Es zeigen:

| Fig. 1 | Eine Sägezahnstruktur einer Trennplatte, |
| Fig. 2 | übereinander angeordnete Sägezahnstrukturen zur Realisierung von Strömungskanälen mit quadratischem Querschnitt, |
| Fig. 3 | eine schematische Darstellung des Profilbereiches übereinander angeordneter Trennplatten mit schräggestellter Sägezahnstruktur, |
| Fig. 4 | eine stilisierte Darstellung der Strömungsablenkung, |
| Fig. 5 | eine stilisierte Darstellung der Rotationsströmung, |
| Fig. 6 | eine Darstellung der Abstützung der Trennplatten, |
| Fig. 7 bis 10 | weitere Formen der Trennplattenstruktur, |
| Fig. 11 | eine Prinzipdarstellung des montierten Wärmetauschers, |
| Fig. 12 | eine Anordnung des Wärmetauschers in einem Einbaugehäuse, |
| Fig. 13 bis 17 | Einbauvarianten des Wärmetauschers im Fensterbereich, |
| Fig. 18 | eine schematische Darstellung übereinander angeordneter Trennplatten eines im Kreuzstrom betriebenen Wärmetauschers |
| Fig. 19 | die teilweise Abdeckung der Eintrittsbereiche für die beiden Stoffströme an der Kante des Wärmetauschers, an der die Eintrittsbereiche aufeinanderstoßen. |

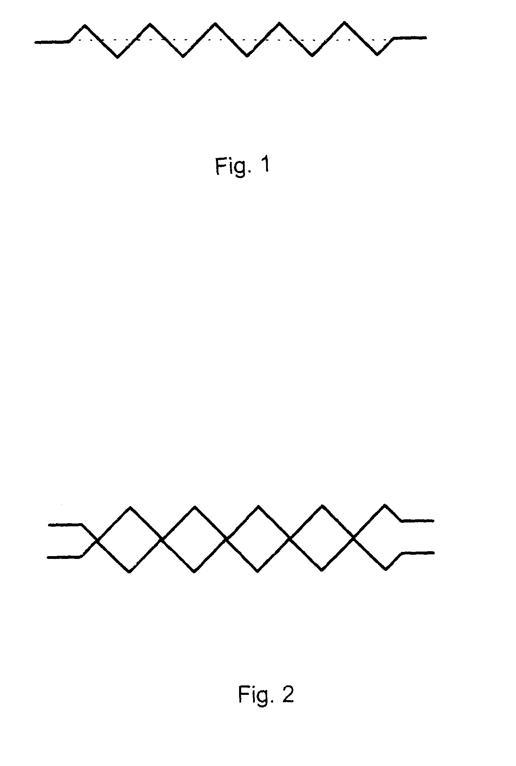

Nachfolgend wird eine Gegenstrom-Wärmetauscheranordnung beschrieben, deren Trennplatten (Wärmeübertragungsflächen) im einfachsten Realisierungsfall in einer Schnittebene senkrecht zur Längsrichtung des Wärmerückgewinners (Richtung des Druckgradienten) sägezahnförmige Struktur besitzen, wobei die "Zähne" im einfachsten Realisierungsfall gleichschenklige rechtwinklige Dreiecke bilden und die Trennplattenmittellinie die Zahnflanken (Schenkel der Dreiecke) halbiert (Fig. 1). So längs der Strömungsrichtung strukturierte Trennplatten bilden durch Übereinanderlegen an den "Sägezahnspitzen" hochkant zur Trennplattenebene liegende Strömungskanäle quadratischen Querschnitts, wobei jeweils benachbarte Kanäle in Gegenrichtung durchströmt werden. Das Volumen des Wärmetauschers ist damit dicht mit Kanälen annähernd quadratischen Querschnitts ausgefüllt (Fig. 2). In Abhängigkeit von den Kanalabmessungen wird dabei praktisch die gleiche Wärmetauscherfläche pro Volumen realisiert wie bei dem oben betrachteten Kanalwärmetauscher.

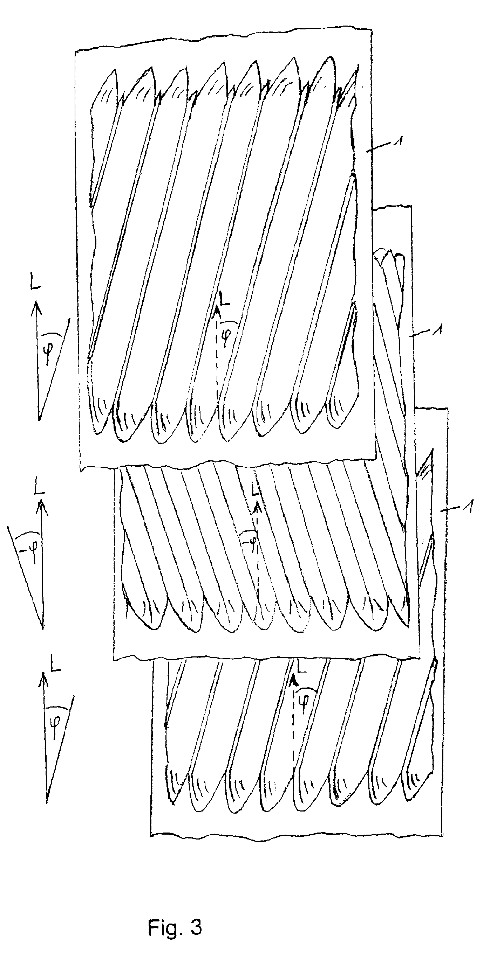

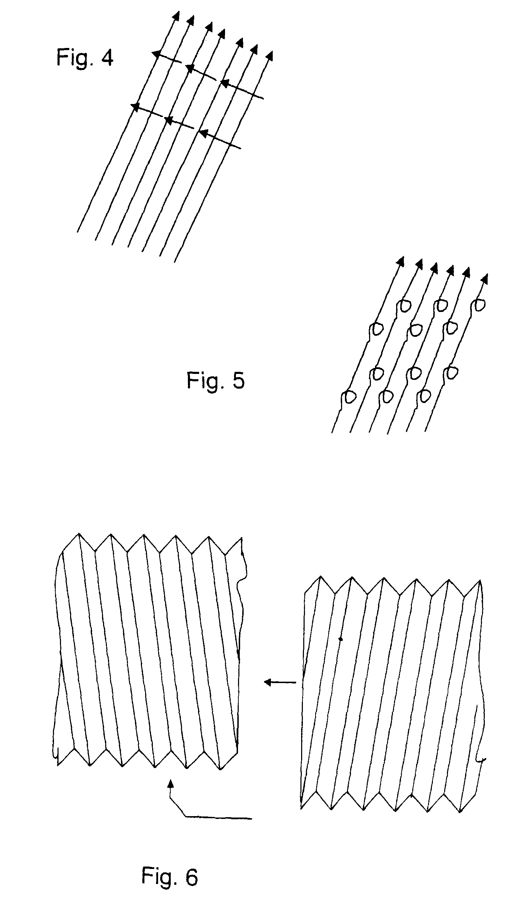

Entscheidendes Element der hier zu beschreibenden Lösung ist eine definierte Schrägstellung der sägezahnförmigen Strukturierung der Trennplatten gegenüber der Längsrichtung (Richtung des Druckgradienten) des Wärmerückgewinners derart, daß die diese Strukturierung bestimmenden Kanten bei einer gegebenen Trennplatte um einen vorgegebenen Winkel φ≠0°gegen die Längsrichtung gedreht ist und bei der über dieser und der unter dieser angeordneten Trennplatte um den Winkel -φ≠0° gegen die gleiche Längsrichtung (Fig. 3). Durch diese Anordnung sägezahnförmig strukturierter Trennplatten, deren beschriebene Strukturierung alternierend um einen Winkel φ und -φ gegen die Längsrichtung des Wärmerückgewinners ausgerichtet ist, wird offensichtlich die verfügbare Wärmtauscherfläche gegenüber einer Anordnung mit nicht schräggestellter Strukturierung nicht geändert. Diese Schrägstellung der Strukturierung bewirkt jedoch eine qualitative Änderung der Strömung in den Kanälen. Die Strömung in Längsrichtung des Wärmetauschers, also in Richtung des Druckgefälles, wird überlagert von einer Rotationsströmung um diese Längsrichtung. Denn durch die bezüglich der Längsrichtung hinsichtlich des Betrages gleiche, aber in die entgegengesetzte Richtung erfolgte Schrägstellung der Strukturierung aufeinanderfolgender Trennplatten wird die Strömung symmetrisch bezüglich der Auflageebene aufeinanderfolgender Trennplatten senkrecht zur Hauptströmungsrichtung in entgegengesetzte Richtungen abgelenkt (Fig. 4). Im Ergebnis wird die ohne diese Schrägstellung bei ausreichend kleinen Strömungsgeschwindigkeiten laminare Strömung von einer Rotationsströmung überlagert. Diese Rotationsströmung ist aufgrund der Struktur der Trennflächen keine regelmäßige. Im Ergebnis liegt aber keine laminare Strömung mehr vor (Fig. 5). Die angestrebte Vergrößerung des k-Wertes durch Störung der laminaren Strömung wird mit der erfindungsgemäßen Lösung ohne zusätzliche und wiederholte stärkere Änderungen von Strömungsquerschnitten und damit ohne überhöhte Druckverluste erreicht.

Die Schrägstellung der (halb-)kanalförmigen Struktur der Trennplatten führt erfindungsgemäß zur Lösung eines weiteren konstruktiven Problems bei Wärmerückgewinnern, nämlich zur Sicherung einer druckstabilen gegenseitigen Abstützung der Trennplatten ohne jegliche zusätzliche Abstandshalterungen (Fig. 6).

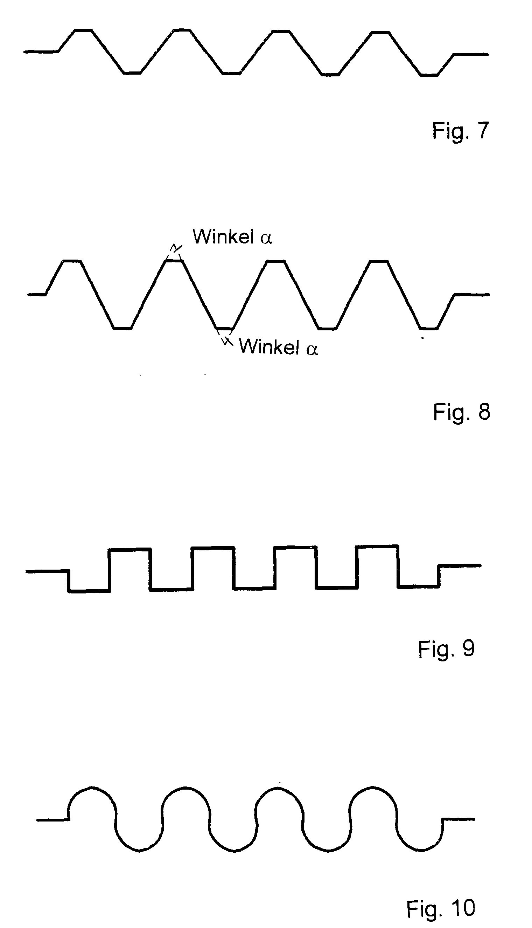

Zur besseren Aufnahme dieses Auflagedruckes, aber auch zur gezielten Beeinflussung der Strömungsverhältnisse, wird bei einer weiteren Ausführungsform der Trennplatten die durch aneinandergereihte rechtwinklige Dreiecke darstellbare sägezahnförmige Struktur durch eine solche ersetzt, bei der die Spitzen der "Sägezähne" zu beiden Seiten der Trennplattenmitte abgeflacht sind, die Struktur also aus aneinandergereihten Trapezstümpfen bestehend beschrieben werden kann (Fig. 7). Bei weiteren Ausführungsformen ist die Form der Strukturierung der Trennplatten nicht durch eine Grundstruktur auf der Basis rechtwinkliger Dreiecke bestimmt (siehe Fig. 8). Vielmehr wird bei weiteren Ausführungsformen die trapezförmige Struktur durch eine Grundstruktur auf der Basis von Dreiecken mit einem spitzen Winkel a < 90° bestimmt (Fig. 8). Im Grenzfall $\alpha \to 0$ und unendlich großer Schenkellängen dieser fiktiven Dreiecke geht diese Struktur in eine Rechteckstruktur über (Fig. 9). Eine solche rechtwinklige, mäanderförmige Strukturierung erzeugt in einer Schnittebene, in der die Struktur zweier übereinanderliegender Trennwände nicht gegeneinander verschoben ist, Kanäle rechteckiger, vorzugsweise quadratischer Form. In einer weiteren Ausführungsform erfolgt die Strukturierung der Trennwände wellblechförmig (Fig. 10).

Bei anderen Ausführungsformen aller vorstehend beschriebenen Trennplatten läuft die Strukturierung der Trennplatten nicht in der Mittelebene der Strukturierung aus, sondern in einer beliebigen Ebene der Strukturen, beispielsweise an der unteren bzw. oberen Begrenzung derselben.

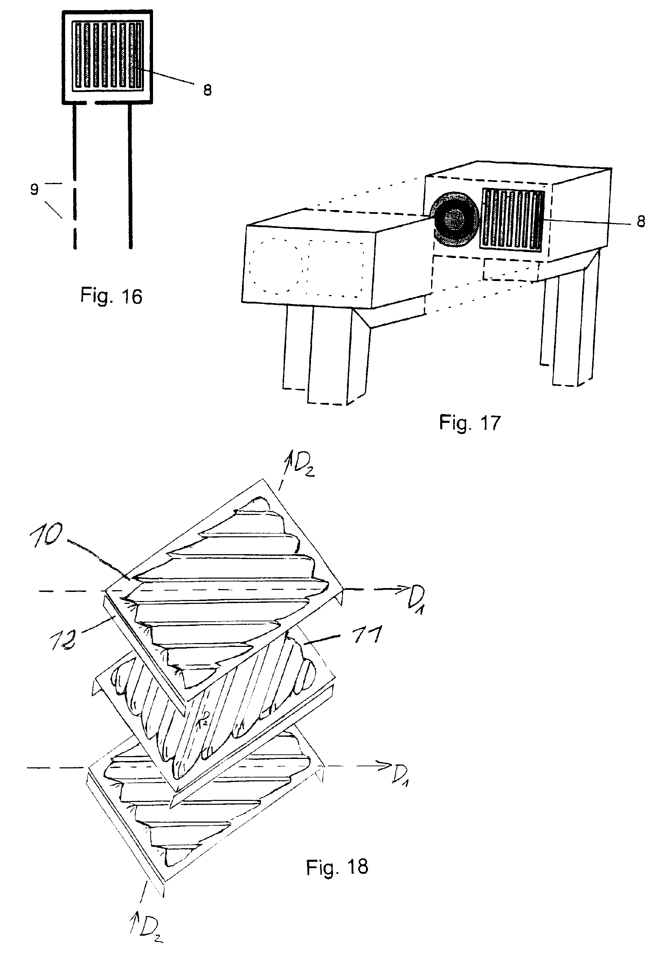

Die Nutzung der Vorteile einer Profilschrägstellung, insbesondere die damit verbundene deutliche Vergrößerung der bei gleichem Abstand der Trennelemente im Vergleich zu plattenförmigen Trennelementen beim Kreuzstromwärmetauscher für den Wärmeaustausch verfügbaren Fläche wird dadurch möglich, daß die Profile alternierend parallel zur Diagonale $D_1$ (Profilelement 10 in Fig. 18) und darauffolgend zur zweiten Diagonale $D_2$ (Profilelement 11) ausgerichtet werden, wobei gewisse Abweichungen von dieser Ausrichtung möglich sind. Bei quadratischem Grundriß des Kreuzstromwärmetauschers entspricht das einer Schrägstellung der Profile des einen Profilelementes um 45° und der des zweiten Profilelementes um -45° gegen die jeweilige Hauptströmungsrichtung in jedem Strömungskanal. Die Verschlußleisten 12 in Fig. 18 verschließen alternierend aufeinanderfolgende Strömungskanäle für die eine und darauffolgend für die andere Strömungsrichtung.

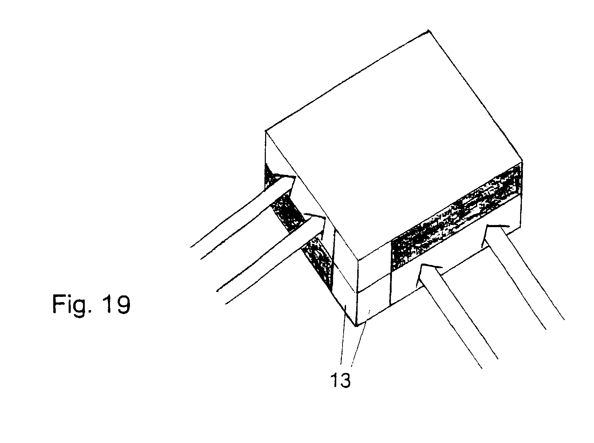

Die durch die alternierend entgegengerichtete Schrägstellung der Profile der Wärmetauschertrennelemente bewirkten Strömungen quer zu den beiden Hauptströmungsrichtungen des Kreuzstromwärmetauschers ermöglichen durch teilweise Abdeckung 13 der beiden Zuströmbereiche, beginnend an der gemeinsamen Kante (Fig. 19) des Wärmetauschers, eine weitere Minderung der Inhomogenitäten des Temperaturgradienten über die Trennelemente des Wärmetauschers.

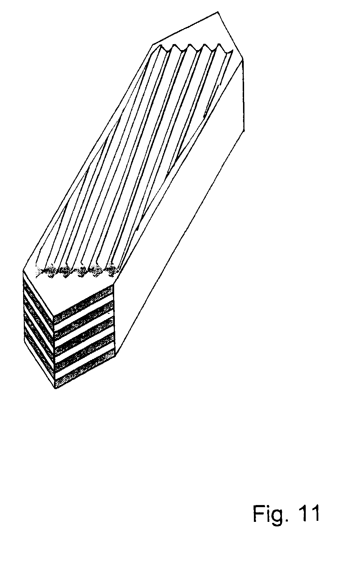

Die Zu- und Abfuhr von Frischluft und Abluft erfolgt bei dem hier beschriebenen Wärmerückgewinner nach dem vom Kreuzstrom-Plattenwärmeübertrager gut bekannten Prinzip. Das Paket strukturierter Trennplatten wird dazu in einen aufgeschnittenen und entsprechend diesem Paket aufgebauten Plattenwärmeübertrager eingefügt, die Zufuhr und Abfuhr zu den Strömungskanalebenen erfolgt nach dem bekannten Prinzip des Plattenwärmeübertragers (Fig. 11). Die erfindungsgemäße Lösung für einen Wärmerückgewinner ist also nicht würfelförmig, wie es die Kreuzstrom-Plattenwärmerückgewinner in der Regel sind, sondern haben die Form eines langgestreckten Quaders, und sind damit in der Form den Anwendungsbedingungen gut anpaßbar. Die erfindungsgemäße Lösung für einen hocheffektiven Wärmerückgewinner ist breit einsetzbar, insbesondere in allen Fällen der Anwendung bislang verfügbarer Wärmerückgewinner. Wegen des geringen Raumbedarfs und der langgestreckten Bauform erfolgt eine vorteilhafte Anwendung der erfindungsgemäßen Wärmerückgewinner auch bei dezentralen Anlagen. Für den wirtschaftlich vorteilhaften Einbau von Wärmerückgewinnungsanlagen im Bereich vorhandener Öffnungen in Mauerwerken kommen vor allem die Fensterbereiche in Frage.

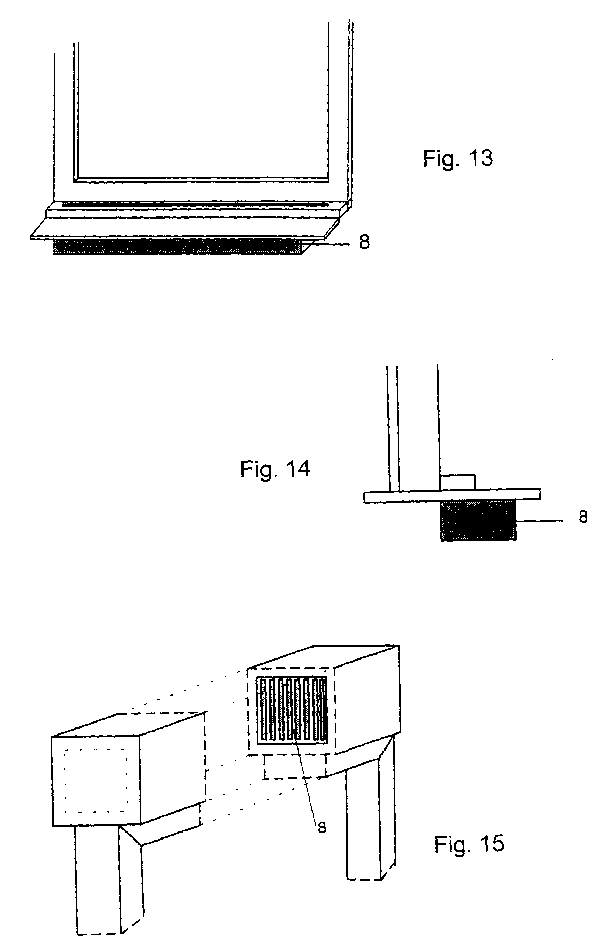

Erfindungsgemäß wird dazu die Wärmerückgewinnungsanlage, bestehend aus einem Wärmerückgewinner 1, zwei Gebläsen 2, entsprechenden Filtern 3, einer Kondensatauffangvorichtung, einer Regeleinrichtung, Zuluftkanälen 4, Abluftluftkanälen 5, sowie Kanälen bzw. Öffnungen für die Außenluftzufuhr 6 und die Fortluftableitung 7, in einem Einbaugehäuse angeordnet (Fig. 12). Diese erfindungsgemäße Wärmerückgewinnungsanlage 8 wird in einer vorteilhaften Ausführungsform mit dem Einbaugehäuse in einem vergrößerten Fensterbrett bzw. unter diesem angebracht (Fig. 13, 14). Die erfindungsgemäße Wärmerückgewinnungsanlage füllt wegen der langgestreckten Form des Turbulenzwärmerückgewinners die gesamte Länge des durch Vergrößerung der Fensterbank gewonnenen Volumens aus. Die Frischluftansaugung erfolgt über eine schlitzförmige Öffnung an der Außenseite des vergrößerten Fensterbrettes. Die Abluft wird über Hohlräume im darüberliegenden Fensterrahmen zum oberen Bereich des Fensterrahmens geführt und dort über entsprechende Austrittsdüsen nach außen abgeleitet. Die Kondensatableitung wird über Kanäle im Fensterbrett nach außen realisiert. Raumluft wird über ein Spaltsystem zwischen Fensterbrett und unterem Fensterrahmenbereich angesaugt, die Frischluft wird unter dem Fensterbrett in den Raum abgegeben. Bei anderen Ausgestaltungen dieser erfindungsgemäßen Lösung erfolgt die Ableitung der Abluft über entsprechende Öffnungen an der Fensterbrettrückseite bzw. über Hohlraumprofile, die an den Außenseiten der senkrechten Schenkel des Fensterrahmens angebracht sind. Die Funktion dieser Hohlraumprofile können auch Rolladenlaufschienen übernehmen, soweit diese entsprechende Hohlräume aufweisen.

In einer anderen Ausführung der erfindungsgemäßen Lösung wird die Wärmerückgewinnungsanlage 8 mit Einbaugehäuse am oberen waagerechten Teil des Fensterrahmens angeordnet (Fig. 15). Die Abluft wird über verschließbare Öffnungen im oberen Bereich des Fensterrahmens nach außen geleitet. Die Frischluft wird über Hohlraumkanäle der darunter liegenden senkrechten Holme des Fensterrahmens angesaugt, die im unteren Drittel über hierzu geeignete, mit einer Schutzvorrichtung gegen unerwünschte Staubzufuhr versehene Öffnungen verfügen. Die Kondensatableitung erfolgt über entsprechende, hinter dem Wärmerückgewinner durch den Fensterrahmen nach draußen führende Kanäle. Raumluftansaugung und Zufuhr der Frischluft in den Raum erfolgen in Höhe des Wärmerückgewinners über in entgegengesetzte Raumrichtungen weisende Öffnungen. Eine weitere Ausgestaltung dieser erfindungsgemäßen Lösung sieht die Frischluftansaugung über Hohlraumprofile, vorzugsweise aus Kunststoff, vor, die an den Außenseiten der senkrechten Schenkel des Fensterrahmens angebracht sind und vom Gehäuse der Wärmerückgewinnungsanlage bis zur Höhe des Fensterbrettes reichen (Fig. 16). Im unteren Drittel weisen diese Hohlraumprofile nach außen hin entsprechende Öffnungen 9 auf, durch die die Frischluft angesaugt wird. In einer speziellen Ausgestaltung werden die Hohlräume von Rolladenlaufschienen für die Luftansaugung genutzt, wobei auch hier im unteren Drittel Öffnungen für den Luftausgang vorgesehen sind. Die Kondensatableitung kann durch einen getrennten Kanal über das Hohlraumprofil bzw. die Rolladenlaufschiene erfolgen.

Eine andere Ausführungsform der erfindungsgemäßen Lösung sieht den Einbau der Wärmerückgewinnungsanlage 8 mit Einbaugehäuse im freien Volumen eines Rolladenkastens vor (Fig. 17). Auch hier werden für die Zu- und Ableitung der Frischluft und der Raumluft in geeigneter Weise freie Hohlräume im darunter liegenden Fensterrahmen bzw. an den senkrechten Holmen des Fensterrahmens befestigte Hohlraumprofile oder Rolladenlaufschienen genutzt. Gleiches gilt für die Kondensatableitung zum Gebäudeäußeren.

Weitere Gestaltungen der erfindungsgemäßen Lösung für den Einbau der Wärmerückgewinnungsanlage in einem vergrößerten Fensterbrett, am oberen waagerechten Teil des Fensterrahmens oder in einem Rolladenkasten sehen eine Vertauschung von Frischluftzufuhr und Fortluftableitung über die vorstehend beschriebenen Kanäle bzw. Öffnungen zum Gebäudeäußeren vor.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

## Patentansprüche

1. Wärmetauscher, bestehend aus übereinander angeordneten Profilelementen,
   dadurch gekennzeichnet,
   daß die übereinander angeordneten Profilelemente (1) alternierend jeweils einen Winkel φ und -φ mit der Längsrichtung (L) des Wärmetauschers (2) bilden.

2. Wärmetauscher nach Anspruch 1,
   dadurch gekennzeichnet
   daß das Profil in der Schnittebene senkrecht zur Profillängsrichtung sägezahnförmig ist, wobei die gleichförmigen, direkt aneinandergereihten Zähne gleiche Flankenlängen haben, diese Flanken an den Zahnspitzen rechtwinklig zueinander stehen und die Mittellinie der Profilebene die Zahnflanken in ihrer Länge halbiert, das Profil daher die Form aneinandergereihter rechtwinkliger gleichschenkliger Dreiecke hat, deren Hypothenusen die Profilplattenmittellinie bilden und die alternierend zu beiden Seiten der Mittellinie angeordnet sind, die von diesen Profilen erzeugten Kanäle für die übereinander liegenden Trennplatten alternierend jeweils einen festen Winkel φ und -φ mit der Strömungsrichtung des Wärmetauschers bilden, somit über die gesamte Länge des Wärmetauschers der gleiche Strömungsquerschnitt in der Strömungsrichtung verfügbar ist.

3. Wärmetauscher nach Anspruch 1,
   dadurch gekennzeichnet,
   daß bei dem sägezahnförmigen Profil, bestehend aus aneinandergereihten gleichschenkligen, rechtwinkligen, alternierend zu beiden Seiten der Profilplattenmittellinie liegenden Dreiecken, die Spitzen dieser Dreiecke abgeflacht oder abgerundet sind, das Profil also aus Kegelstümpfen besteht, die alternierend nach beiden Seiten der Profilplattenmitte in gleicher Höhe angeordnet sind.

4. Wärmetauscher nach Anspruch 1,
   dadurch gekennzeichnet,
   daß bei den die Form des Profils kennzeichnenden Dreiecken der diese bestimmende Winkel von 90° verschieden ist und diese Dreiecke nicht gleichschenklig sind.

5. Wärmetauscher nach einem der Ansprüche 1 bis 4,
   dadurch gekennzeichnet,
   daß das Profil eine wellige Form hat und dabei gleich große freie Flächen (Stömungsquerschnitte) zwischen den einzelnen Profilplatten gesichert werden.

**6.** Wärmetauscher nach einem der Ansprüche 1 bis 5,
dadurch gekennzeichnet,
daß die Profile der Trennplatten zu den Seiten- und
den Stirnkanten hin in einer bezüglich der Trennplattenstruktur beliebig liegenden ebenen Platte
auslaufen, die insbesondere auch am unteren oder
oberen Ende der Struktur liegen kann.

**7.** Wärmetauscher nach einem der Ansprüche 1 bis 6,
dadurch gekennzeichnet,
daß die alternierend unterschiedliche Schrägstellung der Profile aufeinanderfolgender, übereinander liegender Trennplatten für die druckstabile Abstützung der Platten gegeneinander genutzt wird.

**8.** Wärmetauscher nach einem der Ansprüche 1 bis 6,
dadurch gekennzeichnet,
daß die Profile der Trennplatten zu den Stirnseiten
der letzteren hin in ebene, in der Profilplattenmittellinie liegende Platten auslaufen, die in der Längsrichtung spitz zulaufen, in der Spitze einen stumpfen, rechten oder spitzen Winkel bilden und so eine
Verteilung der Stoffströme auf zwei in entgegengesetzten Richtungen durchströmten Strömungsebenen in Analogie zum Kreuzstromwärmetauscher
realisiert wird.

**9.** Wärmetauscher nach einem der Ansprüche 1 bis 7,
dadurch gekennzeichnet,
daß die Profil-Trennplatten stumpf enden und/oder
an den Seiten des Wärmetauscherendes die Trennplattenzwischenräume wechselseitig mit Strömungskanälen verbunden werden.

**10.** Verfahren zum Wärmeaustausch zwischen Fluiden, welche durch Profilelemente isoliert voneinander im Gegenstrom geführt werden,
dadurch gekennzeichnet,
daß die Fluidströmung in Richtung des Druckgradienten durch in Schrägstellung versetzt zueinander
angeordnete Profilelemente geführt wird, hierdurch
Querströmungen erzeugt werden und durch Überlagerung der Längsströmung mit den Querströmungen eine Rotationsströmung entsteht.

**11.** Verfahren nach Anspruch 10,
dadurch gekennzeichnet,
daß die Querströmungen symmetrisch zur Auflageebene aufeinanderfolgender Profilelemente entgegengerichtet sind.

**12.** Raumlüftungsgerät mit einem Wärmetauscher
nach Anspruch 1, mindestens einem Gebläse, Filtern und einer Kondensatauffangvorrichtung,
dadurch gekennzeichnet,
daß dieses Raumlüftungsgerät unter dem Fensterbrett eines Fensters angeordnet oder in ein vergrößertes Fensterbrett integriert ist.

**13.** Raumlüftungsgerät nach Anspruch 12,
dadurch gekennzeichnet,
daß die Abluft vom abluftseitigen Ausgang des Lüftungsgerätes über Hohlräume im darüber liegenden Fensterrahmen zum oberen Fensterbereich
geführt wird und dort über entsprechende Öffnungen nach außen abgeleitet wird.

**14.** Raumlüftungsgerät nach Anspruch 12,
dadurch gekennzeichnet,
daß die Abluft vom abluftseitigen Ausgang des Lüftungsgerätes über Hohlraumprofile oder die Hohlräume von Rolladenlaufschienen, angebracht an
den Außenseiten der senkrechten Schenkel des
Fensterrahmens, zum oberen Fensterbereich geführt wird und dort über entsprechende Öffnungen
nach außen abgeleitet wird.

**15.** Raumlüftungsgerät nach einem der Ansprüche 12
bis 14,
dadurch gekennzeichnet,
daß die Ansaugung der Frischluft über Öffnungen
an der Außenseite des Fensterbrettes oder des vergrößerten Fensterbrettes, die Ansaugung der
Raumluft über ein Spaltsystem zwischen Fensterbrett und unterem Fensterrahmen bzw. im unteren
Fensterrahmenbereich und die Abgabe der Frischluft in den Raum durch ein Spaltsystem unter dem
Fensterbrett erfolgt.

**16.** Raumlüftungsgerät nach einem der Ansprüche 12
bis 15,
dadurch gekennzeichnet,
daß die Kondensatableitung aus der Wärmerückgewinnungseinheit über eine Sammelvorrichtung
und geeignete Kanäle nach außen erfolgt.

**17.** Raumlüftungsgerät mit einem Wärmetauscher
nach Anspruch 1, mindestens einem Gebläse, Filtern und einer Kondensatauffangvorrichtung,
dadurch gekennzeichnet,
daß dieses Lüftungsgerät am oberen waagerechten Teil des Fensterrahmens angeordnet wird, die
Abluftableitung über verschließbare Öffnungen an
der Außenseite des Lüftungsgerätes oder über Öffnungen im oberen Bereich des Fensterrahmens erfolgt und die Raumluftansaugung, wie auch die
Frischluftzufuhr aus bzw. in den Raum, über entsprechende raumseitige, in entgegengesetzte
Richtungen weisende Öffnungen, oder über Verteilerkanäle am Lüftungsgerät realisiert wird.

**18.** Raumlüftungsgerät nach Anspruch 17,
dadurch gekennzeichnet,
daß die Frischluftansaugung über Hohlraumprofile oder die Hohlräume von Rolladenlaufschienen, angebracht an den Außenseiten der senkrechten Schenkel des Fensterrahmens, erfolgt, die im unteren Drittel des Fensterbereiches über entsprechende mit Staubfiltern versehene Öffnungen verfügen.

**19.** Raumlüftungsgerät nach Anspruch 17,
dadurch gekennzeichnet,
daß die Kondensatableitung aus der Wärmerückgewinnungseinheit über eine Sammelvorrichtung und geeignete Kanäle direkt oder über die darunter liegenden senkrechten Schenkel der Fensterrahmen bzw. an den senkrechten Fensterschenkeln befestigten Hohlraumprofile oder über Hohlräume in Rolladenlaufschienen nach außen erfolgt.

**20.** Raumlüftungsgerät mit einem Wärmetauscher nach Anspruch 1, mindestens einem Gebläse, Filtern und einer Kondensatauffangvorrichtung,
dadurch gekennzeichnet,
daß dieses Lüftungsgerät im Rolladenkasten eines Fensters angeordnet wird, die Abluft über verschließbare Öffnungen an der Außenseite des Rolladenkastens oder über Öffnungen im oberen Bereich des Fensterrahmens nach außen geleitet wird und die Raumluftansaugung, wie auch die Frischluftzufuhr in den Raum, über entsprechende raumseitige, in entgegengesetzte Richtungen weisende Öffnungen am Rolladenkasten oder über entsprechende Verteilerkanäle realisiert wird.

**21.** Raumlüftungsgerät nach Anspruch 20,
dadurch gekennzeichnet,
daß die Frischluftansaugung über Hohlraumprofile oder die Hohlräume von Rolladenlaufschienen, angebracht an den Außenseiten der senkrechten Schenkel des Fensterrahmens, erfolgt, die im unteren Drittel des Fensterbereiches über entsprechende mit Staubfiltern versehene Öffnungen verfügen.

**22.** Raumlüftungsgerät mit Wärmerückgewinnungssystem nach Anspruch 20,
dadurch gekennzeichnet,
daß die Kondensatableitung aus der Wärmerückgewinnungseinheit über eine Sammelvorrichtung und geeignete Kanäle direkt oder über die darunter liegenden senkrechten Schenkel der Fensterrahmen bzw. an den senkrechten Fensterschenkeln befestigten Hohlraumprofile oder über Hohlräume in Rolladenlaufschienen nach außen erfolgt.

**23.** Raumlüftungsgerät nach einem der Ansprüche 13 bis 22,
dadurch gekennzeichnet,
daß die Kanäle bzw. Öffnungen für die Frischluftzufuhr und die Fortluftableitung gegenseitig vertauscht sind.

**24.** Im Kreuzstrom betriebener Wärmetauscher, bestehend aus übereinander angeordneten Profilelementen,
dadurch gekennzeichnet,
daß die Profile der Profilelemente (10) und (11) alternierend jeweils parallel oder nahezu parallel zu der einen Diagonalen $D_1$ und darauffolgend parallel oder nahezu parallel zur zweiten Diagonalen $D_2$ der Grundfläche des Wärmetauschers ausgerichtet sind.

**25.** Kreuzstromwärmetauscher nach Anspruch 24,
dadurch gekennzeichnet,
daß die Zuströmbereiche an der gemeinsamen Kante des Wärmetauschers von dieser Kante aus beginnend teilweise abgedeckt werden.

Fig. 1

Fig. 2

Fig. 3

Fig. 4

Fig. 5

Fig. 6

Fig. 7

Winkel α

Winkel α

Fig. 8

Fig. 9

Fig. 10

Fig. 11

Fig. 13

8

Fig. 14

8

8

Fig. 15

Fig. 16

Fig. 17

Fig. 18

Fig. 19

13

Europäisches
Patentamt

**EUROPÄISCHER RECHERCHENBERICHT**

Nummer der Anmeldung

EP 99 25 0323

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 2 047 313 A (APV CO LTD) 26. November 1980 (1980-11-26) | 1,4,7, 9-11 | F24F12/00 F28D9/00 |
| Y | * Seite 1, Zeile 98 - Seite 2, Zeile 1; Abbildungen 1-7 * | 2,6,8, 12-14,16 | |
| A | | 3 | |
| Y | BE 1 003 417 A (LEPELEIRE GUIDO DE) 17. März 1992 (1992-03-17) * Seite 1, letzter Absatz - Seite 4, Absatz 4; Abbildungen * | 2,8 | |
| Y | EP 0 321 667 A (VIESSMANN HANS) 28. Juni 1989 (1989-06-28) * Spalte 4, Zeile 33 - Spalte 6, Zeile 6; Abbildungen 1-6 * | 6 | |
| X | EP 0 567 393 A (COMMISSARIAT ENERGIE ATOMIQUE) 27. Oktober 1993 (1993-10-27) * Spalte 6, Zeile 42 - Spalte 7, Zeile 14; Abbildungen 6,6A,6B * | 1,5,7, 10,11 | |
| X | DE 26 31 962 A (MUNTERS AB CARL) 20. Januar 1977 (1977-01-20) * Seite 3, letzter Absatz - Seite 6, Absatz 1; Abbildungen 1,2 * | 24,25 | RECHERCHIERTE SACHGEBIETE (Int.Cl.7) F28D F28F F24F |
| D,Y | DE 44 35 064 A (PAUL EBERHARD DIPL ING) 4. April 1996 (1996-04-04) * das ganze Dokument * | 12-14,16 | |
| A | DE 43 43 107 C (FSL FENSTER SYSTEM LUEFTUNG) 9. März 1995 (1995-03-09) * Spalte 4, Zeile 14 - Spalte 7, Zeile 13; Abbildungen * | 12,15 | |

-/--

Der vorliegende Recherchenbericht wurde für alle Patentansprüche erstellt

| Recherchenort | Abschlußdatum der Recherche | Prüfer |
|---|---|---|
| DEN HAAG | 14. Juni 2000 | Van Dooren, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)

Europäisches
Patentamt

Nummer der Anmeldung

EP 99 25 0323

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches Patentamt**

**EUROPÄISCHER RECHERCHENBERICHT**

**Nummer der Anmeldung**

EP 99 25 0323

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 196 54 704 A (FOECKERSPERGER WALTER) 2. Juli 1998 (1998-07-02) * Spalte 5, Zeile 62 - Spalte 10, Zeile 63; Abbildungen * | 17,20 | |
| D,A | DE 27 18 814 A (TAUSEND ERICH) 2. November 1978 (1978-11-02) * Seite 5 - Seite 8; Abbildungen * | 17 | |
| A | PATENT ABSTRACTS OF JAPAN vol. 008, no. 100 (M-295), 11. Mai 1984 (1984-05-11) -& JP 59 012242 A (NIPPON KENTETSU KK;OTHERS: 01), 21. Januar 1984 (1984-01-21) * Zusammenfassung; Abbildungen * | 17 | |
| D,A | DE 195 34 843 A (SKS) 27. März 1997 (1997-03-27) * Spalte 5, Zeile 15 - Spalte 6, Zeile 64; Abbildungen * | 20,23 | RECHERCHIERTE SACHGEBIETE (Int.Cl.7) |
| A | DE 79 17 750 U (DEUTSCHMEISTER BAUELEMENTE) 20. September 1979 (1979-09-20) * Seite 7, letzter Absatz - Seite 9; Abbildungen * | 20 | |
| E | DE 198 13 119 A (BODE FENSTER GMBH & CO KG ;INST ENERGETIK UND UMWELT GGMB (DE)) 7. Oktober 1999 (1999-10-07) * das ganze Dokument * | 1-23 | |

Der vorliegende Recherchenbericht wurde für alle Patentansprüche erstellt

| Recherchenort | Abschlußdatum der Recherche | Prüfer |
|---|---|---|
| DEN HAAG | 14. Juni 2000 | Van Dooren, M |

**Europäisches
Patentamt**

**MANGELNDE EINHEITLICHKEIT
DER ERFINDUNG
ERGÄNZUNGSBLATT B**

Nummer der Anmeldung

EP 99 25 0323

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-11,24,25

   Wärmetauscher mit alternierend ausgerichteten Profilelementen

2. Ansprüche: 12-23

   Raumlüftungsgerät in einem Fensterrahmen

**ANHANG ZUM EUROPÄISCHEN RECHERCHENBERICHT
ÜBER DIE EUROPÄISCHE PATENTANMELDUNG NR.**                    EP 99 25 0323

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2000

| Im Recherchenbericht angeführtes Patentdokument | | Datum der Veröffentlichung | Mitglied(er) der Patentfamilie | | Datum der Veröffentlichung |
|---|---|---|---|---|---|
| GB 2047313 | A | 26-11-1980 | KEINE | | |
| BE 1003417 | A | 17-03-1992 | KEINE | | |
| EP 0321667 | A | 28-06-1989 | AT | 74194 T | 15-04-1992 |
| | | | DE | 3869580 A | 30-04-1992 |
| EP 0567393 | A | 27-10-1993 | FR | 2690503 A | 29-10-1993 |
| | | | DE | 69306155 D | 09-01-1997 |
| | | | DE | 69306155 T | 22-05-1997 |
| | | | ES | 2096878 T | 16-03-1997 |
| DE 2631962 | A | 20-01-1977 | FR | 2318398 A | 11-02-1977 |
| | | | JP | 52041946 A | 31-03-1977 |
| | | | SE | 7508256 A | 19-01-1977 |
| | | | US | 4099928 A | 11-07-1978 |
| DE 4435064 | A | 04-04-1996 | KEINE | | |
| DE 4343107 | C | 09-03-1995 | AT | 162295 T | 15-01-1998 |
| | | | EP | 0658729 A | 21-06-1995 |
| DE 19654704 | A | 02-07-1998 | AU | 5654598 A | 31-07-1998 |
| | | | WO | 9829697 A | 09-07-1998 |
| | | | EP | 0951630 A | 27-10-1999 |
| DE 2718814 | A | 02-11-1978 | KEINE | | |
| JP 59012242 | A | 21-01-1984 | JP | 1440945 C | 30-05-1988 |
| | | | JP | 62048142 B | 12-10-1987 |
| DE 19534843 | A | 27-03-1997 | KEINE | | |
| DE 7917750 | U | | KEINE | | |
| DE 19813119 | A | 07-10-1999 | KEINE | | |

EPO FORM P0461

Für nähere Einzelheiten zu diesem Anhang : siehe Amtsblatt des Europäischen Patentamts, Nr.12/82